# EUROPEAN PATENT APPLICATION

(11) **EP 0 623 928 A1**
(43) Date of publication of application: **09.11.1994**
(21) Application number: 94200421.9
(22) Date of filing: 18.02.1994
(51) Int. Cl.: G11B 23/03

(54) **Diskette, as well as a method and device for manufacturing diskettes**

(30) Priority: 05.05.1993 BE 9300455
(71) Applicant: SENTINEL, naamloze vennootschap., B-3830 Wellen (BE)
(72) Inventor: Frerart, Joseph, B-3891 Gingelom (BE)
(74) Representative: Donné, Eddy

(57) **Abstract**

Diskette of the type having a write protection notch (3), characterized in that it is provided with a lock (7) which permanently keeps the write protection notch (3) in the secured position.

## Description

The present invention concerns a diskette, in particular for informatics, as well as a method and device for manufacturing such diskettes.

It is known that diskettes, in particular 3.5" diskettes, are usually provided with a write protection notch, also called "Write Protect" or "WP-notch", which can be placed in two positions. In a first, closed position, which can be indicated with the inscription "write enable", there are no restrictions to reading and overwriting. In the second, open position, which can be indicated with the inscription "write protect", the diskette can only be read with a PC and can only be written on with special duplicating equipment.

For certain applications, however, diskettes are required which have no write protection notch, in other words diskettes which are permanently protected, which corresponds to the above-mentioned first position. These diskettes are used for writing out programs, one and other such that it is impossible for the ordinary user to accidentally delete or overwrite data on this diskette. Special equipment is used for writing out the programs. As a result, these diskettes cannot be used later on for any other purposes.

The production lines for diskettes are usually fully automatic. Since there is more demand for diskettes with a write protection notch than for diskettes without one, it is not efficient to provide separate production lines for diskettes with a write protection notch on the one hand and for diskettes without a write protection notch on the other hand. Also, both sorts of diskettes are usually manufactured on one and the same production line. However, the production of diskettes without a write protection notch causes several problems to these production lines.

For example, the supply and feed equipment for the write protection notches must be stopped and, since the design of the diskettes changes slightly, the detection and quality control equipment must be adjusted again. Moreover, a number of work stations are out of work in this case.

Another disadvantage results from the well-known fact that a production line always produces diskettes of different qualities. The market for the diskettes having no write protection notch, however, in other words the diskettes which are permanently protected, demands the best quality only. Thus, the manufacturers are obliged to either regard the diskettes of lesser quality, which represent some 20% of the production, as waste, or to provide them manually with a write protection notch. This problem also remains when two separate production lines would be provided.

The production of diskettes having no write protection notch also causes major problems regarding the internal logistics and planning, since the number of products in intermediate stock and final stock are doubled, and since the product coding and labelling is made more difficult.

Also, the invention aims a diskette having the same user characteristics as a diskette without a write protection notch, but which does not cause the above-mentioned problems during its manufacture.

To this aim, the invention concerns a diskette of the type having a write protection notch, characterized in that it is provided with a lock which permanently keeps the write protection notch in the secured position. By "permanently" is understood that the lock cannot be broken manually, at least not easily.

The invention also concerns a method for manufacturing such diskettes, characterized in that it consists in producing diskettes which are equipped with a controllable write protection notch and the subsequent permanent locking of the write protection notch in its secured position during final processing for at least a number of the diskettes.

According to this method, all diskettes are equipped with a write protection notch, and thus all the above-mentioned disadvantages are resolved. The number of products in intermediate stock is halved. Also the final stock volume is reduced, as the above-mentioned final processing can be rapidly planned in a flexible way. Moreover, the final processing can take place immediately before the packaging, as a result of which mixing, wrong labelling, etc. are excluded.

According to a special embodiment of the method, the diskettes are tested at least before the above-mentioned lock is provided, and only those diskettes which meet certain pre-defined quality demands are equipped with the above-mentioned lock. This offers the advantage that only high-quality diskettes are provided with a permanent protection, whereas the other diskettes, of lesser quality, are not to be regarded as waste, but can be sold as ordinary diskettes.

The invention also concerns a device, in particular a production line, to realize the above-mentioned method.

In order to better explain the characteristics according to the invention, the following preferred embodiments are described, by way of example only without being limitative in any way, with reference to the accompanying drawings, where:
figure 1 represents a diskette according to the invention;
figures 2 and 3 represent sections according to lines II-II and III-III in figure 1;
figure 4 represents a view according to line F4 in figure 3;
figure 5 represents the method of the invention in a block diagram.

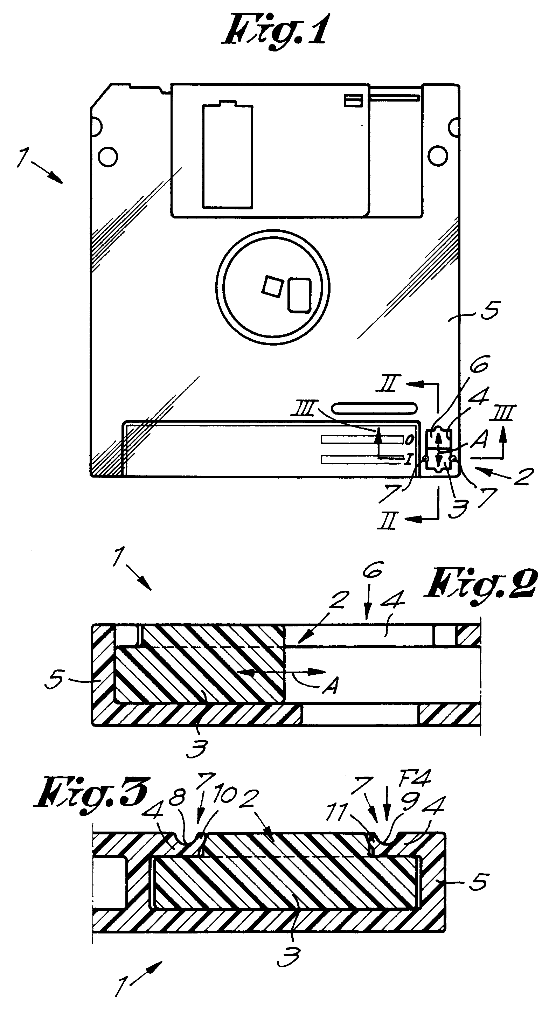

Figure 1 represents a diskette of the type 2D which is equipped with a write protection 2 with a write protection notch 3.

It should be noted that the present invention concerns said diskettes as well as other types of diskettes.

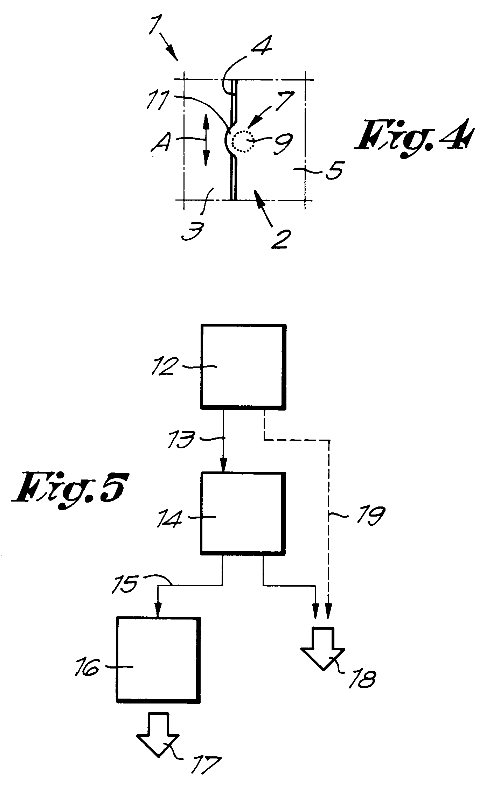

As represented in figures 1 and 2, the write protection notch 3 consists of a little disc which can be shifted in the housing 5 of the diskette 1 by means of guides 4, whereby it can take two positions, and whereby an opening 6 in the housing 5 is either or not sealed. In the position in which the opening 6 is sealed, which is indicated in figure 1 with "0", the protection is switched off and there are no restrictions to reading and overwriting. In the position in which the opening 6 is free, which is indicated in figure 1 with "I", the diskette is protected and can only be read with a PC and can only be written on with special duplicating equipment.

The invention is special in that the diskette is equipped with a lock 7 which permanently keeps the write protection notch 3 in the protected position.

The lock 7 can be of various sorts.

As represented in figures 1, 3 and 4 it may consist of one or several deformations, in this case 8 and 9 respectively, which make sure that the write protection notch 3 becomes secured in the guides 4. These deformations 8-9 may for example consist of indentations with which the edges 10-11 of the housing 5 are pressed in the material of the notch 3.

It is clear that the lock can also be formed in another manner, such as by gluing with cold or hot-setting glue. The above-mentioned deformation technique is preferred, however, since the application of glue is critical as far as amount and positioning are concerned.

The fastening of the write protection notch 3 and the housing 5 can also be carried out by means of a welded joint. In this case, weldable materials should be used.

The invention is meant in the first place for 3.5" diskettes.

As for the method according to the invention, one should preferably proceed as represented in figure 5.

In a first stage, diskettes are produced which are all equipped with a slidable write protection notch 3, as is schematically represented in figure 5, by the means 12.

At least a number of the diskettes produced in the means 12, whereby said number is represented by the arrow 13, are supplied to means 14 for testing and selecting the diskettes 1, whereby a selection is made on the basis of quality.

Of the best diskettes 1, in other words the diskettes which meet certain predefined quality criteria, at least a number of diskettes, represented by arrow 15, are separated, whose write protection 2 is then locked, which is happening in figure 5 in the schematically represented means 16. At the output 17, the diskettes 1 which are equipped with a locked write protection are finally removed.

The other diskettes from the means 14 are removed via an output 18 and contain a write protection notch 3 which is still slidable.

It is clear that part of the diskettes coming from the means 12 can also be directly removed via the represented line 19.

The invention also concerns a device for manufacturing diskettes, in particular a production line, which consists at least of means 12 for the production of diskettes with a controllable write protection 2, consisting of a write protection notch 3, and means 16 for locking the write protection notch in the housing 5 during final processing on at least a number of the produced diskettes. Moreover, as already described above, also testing and selecting means 14 can be provided, such that only the best diskettes are equipped with locks 7.

The locking means 16 can be of various sorts. In the case where the lock 7 is formed of a deformation, these may consist of a pin, which is either or not heated, with which an impression is made in the material. In the case where a glued joint is provided, an automatic dose-measuring element is used. In the case of a welded joint, means are provided to realize a local thermal heating and melting.

The present invention is by no means limited to the embodiments described by way of example and represented in the accompanying drawings; on the contrary, such a diskette, as well as the method and device for manufacturing diskettes, can be made according to the invention in all sorts of variants while still remaining within the scope of the invention, as described in the accompanying claims.

## Claims

1. Diskette of the type having a write protection notch (3), characterized in that it is provided with a lock (7) which permanently keeps the write protection notch (3) in the secured position.

2. Diskette according to claim 1, characterized in that the lock (7) consists of at least one deformation (8,9) which keeps the write protection notch (3) in place.

3. Diskette according to claim 2, characterized in that the deformation (8,9) consists of an indentation.

4. Diskette according to claim 1, characterized in that the lock (7) consists of a glued joint between the housing (5) of the diskette (1) and the write protection notch (3).

5. Diskette according to claim 1, characterized in that the lock (7) consists of a welded joint between the housing (5) of the diskette (1) and the write protection notch (3).

6. Method for manufacturing diskettes, characterized in that it consists in producing diskettes (1) which are equipped with a controllable write protection notch (3) and the subsequent permanent locking of the write protection notch (3) in its secured position during final processing, such for at least a number of the produced diskettes (1).

7. Method according to claim 6, characterized in that before the locking at least a number of the produced diskettes are tested, whereby it is verified whether they meet certain quality criteria, whereby the above-mentioned lock is only provided on those diskettes which meet the required quality criteria.

8. Device for manufacturing diskettes according to the method of claim 6, characterized in that it mainly consists of a production line, which at least consists of means (12) for producing diskettes with a controllable write protection (2), formed of a write protection notch (3), and means (16) for locking the write protection notch (3) in the housing (5) during final processing on at least a number of the produced diskettes.

9. Device according to claim 8, characterized in that it contains testing and selecting means (14), such that only diskettes which meet the required quality criteria are provided with locks (7).
